# DEMANDE DE BREVET EUROPEEN

(11) **EP 0 714 931 A1**
(43) Date de publication de la demande: **05.06.1996**
(21) Numéro de dépôt: 95402431.1
(22) Date de dépôt: 02.11.1995
(51) Int. Cl.: C08K 5/00

(54) **Composition pour plaques coulées à base de réseaux interpénétrés de polyuréthanne et de poly (méthacrylate de méthyle), plaque coulées obtenues à partir de cette composition et leur procédé de fabrication**

(30) Priorité: 29.11.1994 FR 9414278
(71) Demandeur: ATOHAAS HOLDING C.V., NL-2034 MB Haarlem (NL)
(72) Inventeur: Heim, Philippe, F-64000 Pau (FR); Tremillon, Jean-Michel, F-78400 Chatou (FR)
(74) Mandataire: Luziau, Nelly

(57) **Abrégé**

La composition pour plaques coulées de poly(méthacrylate de méthyle) interpénétré avec du polyuréthane élastomère, dans laquelle le rapport des composants de base du réseau polyuréthane - c'est-à-dire la somme du (ou des) composé(s) organique(s) à fonctions isocyanates et du (ou des) polyol(s) - à la somme de ces composants et du méthacrylate de méthyle, est compris entre 3 % et 8 %, comprend un système stabilisant constitué par :
(I) 0,1 à 2 % en poids d'au moins un antioxydant redox ;
(II) 0,01 à 0,5 % en poids d'au moins un antioxydant primaire photostable;
(III) jusqu'à 0,5 % en poids d'un agent absorbeur UV, ces pourcentages étant rapportés au méthacrylate de méthyle.

Application à la préparation de plaques coulées à tenue au vieillissement améliorée.

## Description

La présente invention porte sur une composition pour plaques coulées transparentes à base de réseaux interpénétrés de poly(méthacrylate de méthyle) et de polyuréthane (IPN PU/PMMA), comportant de faibles teneurs en polyuréthane, présentant une haute résistance au choc, de bonnes propriétés optiques et une tenue au vieillissement améliorée. L'invention porte également sur les plaques coulées obtenues à partir de cette composition, ainsi que sur leur procédé de fabrication.

On connaît, par le brevet GB-A-1 239 701, un procédé de fabrication de plaques coulées transparentes à base d'lPN PU/PMMA, ledit procédé consistant, dans un premier temps, à introduire dans un moule un mélange comprenant au moins un monomère vinylique et des précurseurs de polyuréthane, libres de tout groupe fonctionnel copolymérisable avec le(s) monomère(s) vinylique(s) - c'est-à-dire au moins un polyol et au moins un composé organique contenant au moins deux fonctions isocyanate - dans des proportions telles que le rapport des composants du réseau polyuréthane à la somme de ces composants et du (ou des) monomère(s) vinylique(s) soit compris entre 5 % et 95 % en poids, puis, dans un second temps, à soumettre le moule à des conditions de température et de pression permettant la formation successive du polyuréthane, puis celle du poly(méthacrylate de méthyle) en présence dudit polyuréthane.

Les propriétés mécaniques des plaques coulées à base d'lPN PU/PMMA, décrites dans l'art antérieur, varient en fonction de la teneur en polyuréthane. Notamment, lorsque la teneur en polyuréthane augmente, la résistance au choc augmente. En revanche, le module de flexion et la tenue à la chaleur (évaluée par la température de Vicat), diminuent. Par ailleurs, les plaques coulées à teneur faible en polyuréthane sont intéressantes par le fait qu'elles sont plus stables au vieillissement.

La Société déposante a découvert que, contrairement à l'enseignement de l'état de la technique, certaines compositions à base de polyméthacrylate de méthyle comportant de faibles teneurs en polyuréthane pouvaient présenter des résistances au choc équivalentes ou supérieures à celles obtenues pour des compositions identiques comportant des teneurs en polyuréthane plus élevées, ce qui offre par conséquent l'avantage de procurer un excellent compromis entre la résistance au choc, la température de Vicat et le module de flexion. Les plaques coulées à haute résistance au choc résultantes et leur procédé de fabrication font l'objet de la demande de brevet européen EP-A-0 447 309. Ces plaques sont définies comme étant obtenues à partir d'une composition de poly(méthacrylate de méthyle) et de polyuréthane en proportions telles que le rapport des composants du réseau polyuréthane - c'est-à-dire la somme du (ou des) composé(s) organique(s) à fonctions isocyanates et du (ou des) polyol(s) - à la somme de ces composants et du méthacrylate de méthyle soit compris entre 3 % et 8 % en poids environ.

Toute composition, selon EP-A-0 447 309, présente, dans la gamme de 3 % à 8 % en poids environ, au moins un point singulier pour lequel la résistance au choc, et notamment la résistance au choc Charpy non entaillé, atteint une valeur nettement supérieure aux compositions ayant des teneurs en polyuréthane inférieures à 3 % en poids ou immédiatement supérieures à 8 % en poids. Dans cet intervalle de 3 % à 8 % en polyuréthane (PU), la résistance au choc s'accroît pour atteindre un maximum dont la valeur est proche ou supérieure à celle d'une plaque ayant une teneur en PU par exemple d'environ 20 %. La courbe donnant la résistance au choc en fonction de la teneur en PU présente donc, dans cet intervalle, un pic très net. Les points de cette courbe constituent des points "singuliers" correspondant à une valeur de résistance au choc supérieure à celle attendue jusqu'ici avec des plaques contenant une teneur en PU dans cet intervalle. Les plaques coulées présentent des températures de Vicat élevées, supérieures ou égales à 100°C et des modules de flexion supérieurs ou égaux à 2000 MPa, au moins pour le maximum de la courbe. La composition exacte correspondant à ce point singulier est fonction d'un certain nombre de critères, parmi lesquels on citera, entre autres, l'épaisseur de la plaque coulée ainsi que la nature des composants, principalement celle du (ou des) polyol(s) et la présence ou non de monomères acryliques autres que le méthacrylate de méthyle.

Il apparaît cependant que ces plaques coulées à haute résistance au choc sont très sensibles à l'oxydation photothermique, c'est-à-dire qu'elles perdent très rapidement leurs propriétés mécaniques (résistance au choc), leur transparence et deviennent jaunes. L'utilisation d'un antioxydant redox de type HALS ("Hindered Amine Light Stabiliser"), comme le bis (2,2,6,6-tétraméthyl-4-pipéridyl)sébaçate mis en oeuvre dans les compositions exemplifiées dans EP-A-0 447 309, améliore considérablement la tenue au vieillissement (surtout au niveau de la transparence), mais sans permettre d'atteindre le niveau requis en ce qui concerne les propriétés mécaniques et l'indice de jaune.

La présente invention a donc d'abord pour objet une composition pour plaques coulées de poly(méthacrylate de méthyle) interpénétré avec du polyuréthane élastomère, dans laquelle le rapport des composants de base du réseau polyuréthane - c'est-à-dire la somme du (ou des) composé(s) organique(s) à fonctions isocyanates et du (ou des) polyol(s) - à la somme de ces composants et du méthacrylate de méthyle, est compris entre 3 % et 8 %, caractérisée par le fait qu'elle comprend un système stabilisant constitué par:
(I) 0,1 à 2 % en poids d'au moins un antioxydant redox ;
(Il) 0,01 à 0,5 % en poids d'au moins un antioxydant primaire photostable, et
(III) 0 à 0,5 % en poids d'un agent absorbeur UV, ces pourcentages étant rapportés au méthacrylate de méthyle.

L'antioxydant redox (I) peut être choisi parmi tout composé du type HALS (Hindered Amine Light Stabiliser) à groupement piperidinyl, doublement substitué en ortho par des groupements tels que alkyle comme méthyle et tertiobutyle. Ce composé peut être choisi parmi les composés suivants : 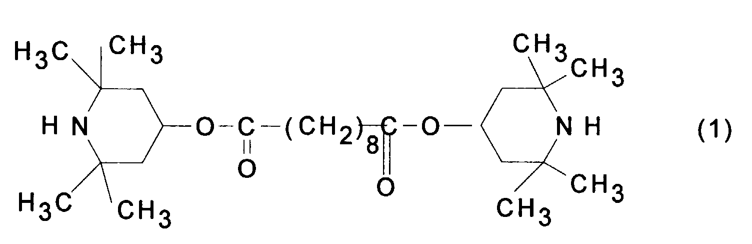 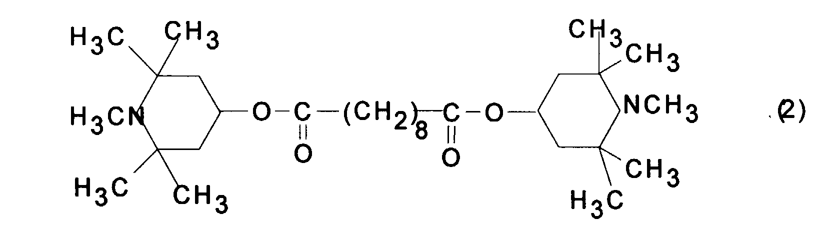 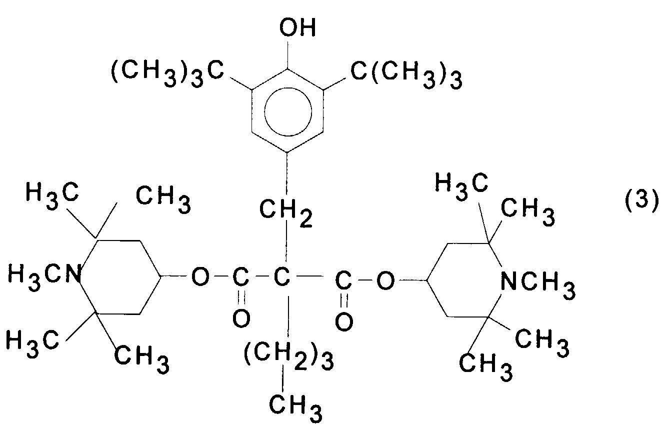 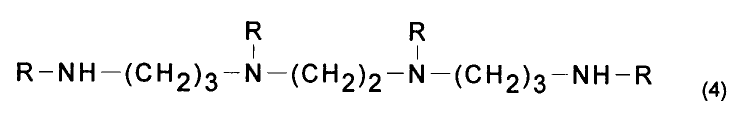 avec 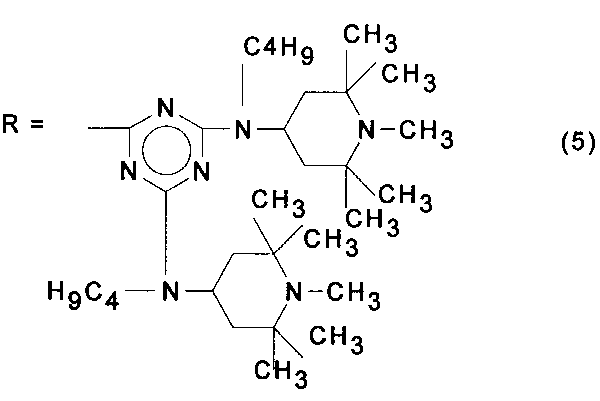 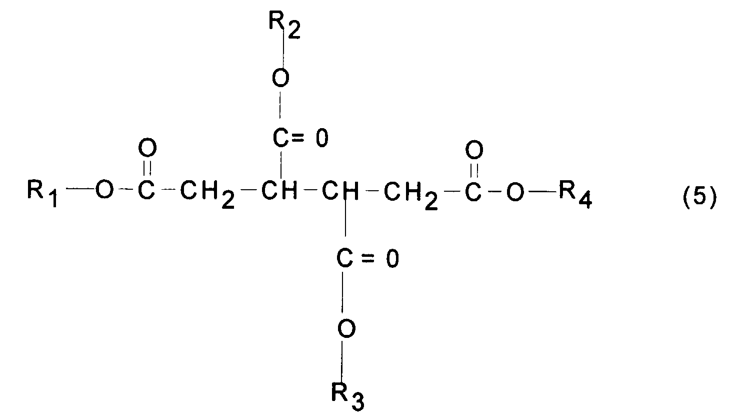 avec R₁, R₂, R₃, R₄ = 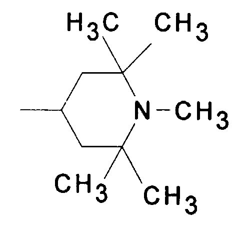 ou C₁₃H₂₇

L'antioxydant primaire photostable (Il) est notamment choisi parmi les hydroxybenzophénones de formule : 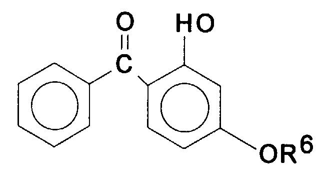 avec R⁶, est un atome d'hydrogène ou un groupe alkyle comprenant de 1 à 12 atomes de carbone, notamment -CH₃, C₈H₁₇, C₁₀H₂₁, C₁₂H₂₅.

Par "antioxydant primaire", on entend un composé qui réagit dès l'étape primaire de la photooxydation, c'est-à-dire qu'il réagit sur les macroradicaux oxygénés lors de cette première étape.

Ces composés sont connus comme agents absorbeur UV, mais ils sont ici utilisés pour leur fonction antioxydante qui sera fonction du radical R⁶, et non pour leurs qualités d'absorbeurs UV.

On pense qu'ils agissent pendant la phase de latence des antioxydants redox et permettent d'éviter la dégradation du polyuréthane pendant la première phase de la photodégradation.

L'agent absorbeur UV (III) peut être choisi parmi tout agent absorbeur UV connu et notamment parmi les composés suivants : 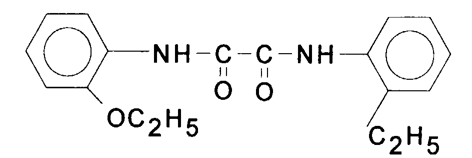 et 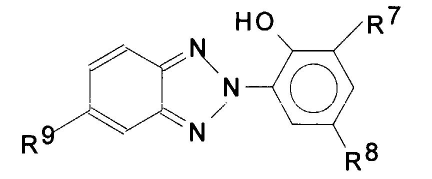 dans laquelle R7 et R8 sont des groupes alkyle ou arylalkyle, dans lesquels le groupe alkyle a de 1 à 5 atomes de carbone, tels que méthyle, butyle, butyle secondaire, butyltertiaire, pentyle, R9 est un atome d'hydrogène ou de chlore.

Le Déposant a ainsi découvert que l'utilisation combinée d'un antioxydant redox de type HALS et d'un antioxydant primaire photostable, dans des quantités définies, permettait notamment de conserver au moins 80 % de la résistance au choc après 1 000 h de vieillissement en enceinte de simulation du vieillissement naturel XENOTEST® 1200, et au moins 73 % de cette résistance après 1500 h de vieillissement, tout en gardant une bonne transparence. L'utilisation de l'antioxydant de type HALS seul dans le même pourcentage permet de ne conserver que 50 % de la résistance au choc initiale, après 1500 heures d'irradiation. L'utilisation des antioxydants conventionnels que sont les phénols bloqués, la diphénylamine et la dihydroquinoléine s'est révélée inefficace.

Le déposant a par ailleurs découvert que l'utilisation combinée d'un antioxydant du type HALS (I), d'un antioxydant primaire (Il) et d'un agent absorbeur UV (III) permet de conserver un indice de jaune acceptable au cours du temps. Ceci a été mis en évidence après 1775 heures d'irradiation en enceinte de simulation du vieillissement naturel WEATHEROMETER XR35. La valeur d'indice de jaune est divisée par trois par rapport à une formulation ne contenant ni l'absorbeur UV, ni l'antioxydant primaire.

La présente invention a également pour objet un procédé de fabrication de plaques coulées à haute résistance au choc et à tenue au vieillissement améliorée, ce procédé comprenant les étapes suivantes :
- dans une première étape, on prépare séparément, d'une part, une solution (A) de méthacrylate de méthyle comprenant au moins un initiateur de polymérisation radicalaire, au moins un composé organique comportant au moins deux fonctions isocyanates, au moins un polyol susceptible de constituer un réseau polyuréthane élastomère avec les fonctions isocyanates du composé organique et, d'autre part, une solution (B) de méthacrylate de méthyle comprenant au moins un agent de réticulation du méthacrylate de méthyle et au moins un catalyseur susceptible de permettre la formation dudit réseau de polyuréthane, le rapport des composants du réseau polyuréthane - c'est-à-dire la somme du (ou des) composé(s) organique(s) à fonctions isocyanates et du (ou des) polyol(s) à la somme de ces composants et du méthacrylate de méthyle étant compris entre 3 % et 8 % en poids environ ; puis
- dans une seconde étape, on mélange les solutions (A) et (B) ; puis
- dans une troisième étape, on introduit le mélange obtenu au cours de la seconde étape dans un moule ; puis
- dans une quatrième étape, on soumet le moule contenant le mélange des solutions (A) et (B) à des conditions de pression et de température propres à permettre successivement la formation du réseau polyuréthane, puis la polymérisation dudit méthacrylate de méthyle dans le réseau ; et
- dans une dernière étape, on laisse refroidir le mélange polymérisé dans le moule avant de procéder au démoulage de la plaque coulée, caractérisé en ce que dans l'une des solutions (A) ou (B), ou bien dans leur mélange, on ajoute un système stabilisant constitué par :
- 0,1 à 2 % en poids d'au moins un antioxydant redox (I) ;
- 0,01 à 0,5 % en poids d'au moins un antioxydant primaire photostable (Il), et
- jusqu'à 0,5 % en poids d'un agent absorbeur UV (III), ces pourcentages étant rapportés au méthacrylate de méthyle.

Il est à noter que les formulations des deux solutions (A) et (B) mentionnées ci-dessus ne sont pas rigides et qu'il est possible de déplacer un ou plusieurs constituants d'une solution vers l'autre, sous réserve de ne pas retrouver, dans la même solution, la totalité des constituants nécessaires à la formation du réseau polyuréthane, à savoir le catalyseur de formation dudit réseau, le(s) polyol(s) et le(s) composé(s) organique(s) à fonctions isocyanates.

Selon une variante du procédé de l'invention, il est possible de mélanger tous les constituants ensemble, du moment que le mélange est maintenu à la température ambiante. Ainsi, un procédé de préparation de polyméthacrylate de méthyle interpénétré avec du polyuréthane élastomère à partir d'un mélange de méthacrylate de méthyle, d'au moins un initiateur de polymérisation radicalaire, au moins un composé organique comportant au moins deux fonctions isocyanates, au moins un polyol susceptible de constituer un réseau polyuréthane élastomère avec les fonctions isocyanates du composé organique, au moins un agent de réticulation du méthacrylate de méthyle et au moins un catalyseur susceptible de permettre la formation dudit réseau polyuréthane, le rapport des composants du réseau polyuréthane -c'est-à-dire la somme du (ou des) composé (s) organique(s) à fonctions isocyanates et du (ou des) polyol(s) à la somme de ces composants et du méthacrylate de méthyle, étant compris entre 3 % et 8 % en poids est caractérisé en ce qu'on prépare le mélange de tous les composants à température ambiante et on lui ajoute un système stabilisant constitué par 0,1 à 2 % en poids d'au moins un antioxydant redox (I), 0,01 à 0,5 % en poids d'au moins un antioxydant primaire photostable (Il) et jusqu'à 0,5 % en poids d'un agent absorbeur UV (III), puis on introduit dans un moule le mélange obtenu et on soumet le moule contenant le mélange à des conditions de pression et de température propres à permettre successivement la formation du réseau polyuréthane, puis la polymérisation dudit méthacrylate de méthyle dans ledit réseau, puis on laisse refroidir le mélange polymérisé dans le moule avant de procéder au démoulage de la plaque coulée.

Dans ce cas, la seconde étape n'est plus nécessaire.

La solution (A), préparée au cours de la première étape du procédé selon l'invention, comprend :
(A1) du méthacrylate de méthyle ;
(A2) un initiateur de polymérisation radicalaire, pouvant être notamment choisi parmi les peroxydes, les hydroperoxydes et les composés diazoïques, tels que, par exemple, l'azobis-isobutyronitrile, le 1,1'-azobis-(2-méthyl-butyronitrile), le 2,2'-azobis(2,4-diméthyl-valéronitrile), le 1,1'-azobis-1-cyclohexane-carbonitrile, le perbenzoate de tertiobutyle, le peroxy-isopropylcarbonate de tertio-butyle, etc. L'initiateur est utilisable à raison d'environ 0,01 à 2 % en poids par rapport à la quantité totale du méthacrylate de méthyle présent dans les solutions (A) et (B) ;
(A3) un composé organique comportant au moins deux fonctions isocyanates. Ce composé peut être difonctionnel, trifonctionnel ou même d'une fonctionnalité supérieure. Il peut être aliphatique, cycloaliphatique ou aromatique ou même comprendre des groupes de plusieurs de ces catégories. Parmi des exemples de tels composés, on peut citer des diisocyanates de structure :

   OCN - R⁷ - NCO,

   dans laquelle R⁷ est une chaîne alkylène possédant de 4 à 8 atomes de carbone, et leurs oligomères, ainsi que le 4,4'-diphénylméthane diisocyanate, les 2,4- et 2,6-toluène diisocyanates, l'isophorone diisocyanate, le 4,4'-dicyclohexylméthane diisocyanate et l'hexaméthylène diisocyanate trimérisé ;
(A4) un polyol susceptible de réagir avec les fonctions isocyanates du composé organique présent dans la solution (A) pour former, dans certaines conditions, un réseau polyuréthane élastomère. Un tel polyol peut être choisi parmi les polyéthers glycols et les polyesters glycols et a, de préférence, un poids moléculaire au moins égal à 1 000 et une fonctionnalité supérieure ou égale à deux.

La solution (A) peut comprendre en outre (A5) au moins un agent ignifugeant, tel que le méthacrylate de tribromophényle, le chlorure de vinylidène, ou des composés organophosphorés comme ceux décrits dans les brevets EP-A-117 174 et FR-A-2 567 127, et/ou au moins un pigment soluble dans le méthacrylate de méthyle.

Elle peut également comprendre (A6) au moins un comonomère éthyléniquement insaturé, copolymérisable avec le méthacrylate de méthyle, tel que, par exemple, le styrène, l'α-méthylstyrène, le tertiobutylstyrène, l'acrylate de n-butyle, l'acrylate de 2-éthylhexyle, le méthacrylate de n-butyle, le vinyltoluène, etc.

Elle peut également comprendre (A7) au moins un agent démoulant choisi, par exemple, parmi l'acide stéarique, le dioctylsulfosuccinate de sodium et les esters phosphoriques organiques. Cet agent démoulant est généralement utilisé à raison d'environ 0,01 % à 2 % en poids par rapport à la quantité totale de méthacrylate de méthyle présent dans les solutions (A) et (B). La présence d'un tel agent démoulant est plus particulièrement recommandée lorsque le moule utilisé à partir de la troisième étape, est constitué d'un verre minéral et/ou lorsque l'on désire obtenir des plaques planes transparentes possédant un parfait état de surface.

La solution (B), préparée au cours de la première étape du procédé selon l'invention, comprend :
(B1) du méthacrylate de méthyle,
(B2) au moins un agent réticulant du méthacrylate de méthyle en quantité suffisante, plus particulièrement en quantité au moins égale à environ 0,1% en poids et, de préférence, au plus égale à 5 % en poids par rapport à la quantité totale de méthacrylate de méthyle présent dans les solutions (A) et (B). Comme agent réticulant, on peut utiliser, par exemple :
(1) des composés ayant au moins deux doubles liaisons polymérisables et,
(2) des composés ayant au moins une double liaison polymérisable et au moins un groupe fonctionnel réactif avec le méthacrylate de méthyle et, le cas échéant, son comonomère.

Comme exemples des composés réticulants ayant au moins deux doubles liaisons polymérisables, on peut citer :
(a) les composés di- ou polyvinyliques, tels que le divinylbenzène, le divinyltoluène, le divinylxylène, l'éther divinylique, la divinylcétone et le trivinylbenzène ;
(b) les di- ou polyesters d'acides mono- ou polycarboxyliques insaturés avec des polyols, tels que les esters des acides di- ou tri(méth)acryliques avec des polyols (tels que l'éthylène glycol, le triméthylolpropane, le glycérol, les polyoxyéthylèneglycols, les polyoxypropylèneglycols, etc.), les polyesters insaturés (que l'on peut obtenir par réaction de l'un quelconque des polyols précités avec un acide insaturé tel que l'acide maléique), etc.,
(c) les bis (méth)acrylamides tels que le N,N-méthylène-bis-acrylamide;
(d) les esters carbamyliques que l'on peut obtenir en faisant réagir des polyisocyanates (tels que le toluène diisocyanate, l'hexaméthylène diisocyanate, le 4,4'-diphénylméthanediisocyanate, etc. et les prépolymères contenant un groupe NCO obtenus en faisant réagir un tel diisocyanate avec des composés contenant des atomes d'hydrogène actifs) avec des monomères contenant des groupes hydroxyles. De tels esters sont notamment ceux des acides di(méth)acryliques que l'on peut obtenir en faisant réagir les diisocyanates précités avec le (méth)acrylate d'hydroxyéthyle;
(e) les éthers di- ou poly(méth)allyliques de polyols tels que les alkylèneglycols, le glycérol, les polyalkylèneglycols, les polyoxyalkylènepolyols, les hydrates de carbone, etc., tels que l'éther diallylique du polyéthylène glycol, l'amidon allylé et la cellulose allylée ;
(f) les esters di- ou polyallyliques d'acides polycarboxyliques tels que le phtalate de diallyle, l'adipate de diallyle, etc., et
(g) les esters d'acides mono- ou polycarboxyliques insaturés avec des éthers mono(méth)allyliques de polyols, tels que l'ester de l'acide (méth)acrylique avec l'éther monoallylique du polyéthylène glycol.

Comme composés réticulants ayant au moins une double liaison polymérisable et au moins un groupe fonctionnel réactif avec le méthacrylate de méthyle et, le cas échéant, son comonomère, on peut citer le N-méthylol(méth)acrylamide, le (méth)acrylate de glycidyle, etc. ;
(B3) un catalyseur capable de favoriser la formation du réseau polyuréthane lorsque le polyol entre en contact avec le composé à fonctions isocyanates. Pour que, quelles que soient les conditions de température au moment du contact, la formation du réseau acrylique ne soit pas initiée prématurément, il est souhaitable que ce catalyseur soit choisi de manière à ne pas former un couple redox avec l'initiateur de polymérisation du méthacrylate de méthyle. Ce catalyseur, dont on peut citer à titre d'exemple, l'octoate stanneux et le dibutyl dilaurate d'étain, est, de préférence, utilisé dans une proportion comprise entre 0,1% et 15 % environ en poids par rapport à la somme du polyol et du composé à fonctions isocyanates.

La solution (B) peut comprendre en outre :
(B4) au moins un pigment dispersible dans le méthacrylate de méthyle ;
(B5) une quantité efficace d'au moins un ignifugeant tel que ceux déjà décrits précédemment;
(B6) une quantité efficace d'au moins un limiteur de chaîne pouvant notamment être choisi parmi les terpènes monocycliques diinsaturés et les terpènes bicycliques mono-insaturés, de préférence en proportion comprise entre 0,005 et 1 % environ en poids par rapport à la quantité totale de méthacrylate de méthyle présent dans les solutions (A) et (B) ;
(B7) au moins un peroxyde organique réputé être un agent vulcanisant du polyuréthane tel que le peroxyde de dicumyle, le peroxyde de tertiobutylcumyle ou le peroxyde de tertiobutyle, et ce dans des proportions comprises de préférence entre 0,002 et 0,5 % en poids par rapport au réseau acrylique.

Elle peut également comprendre (B8) au moins un comonomère éthyléniquement insaturé copolymérisable avec le méthacrylate de méthyle, tel que défini précédemment.

Lorsqu'un (des) comonomère(s) du méthacrylate de méthyle est (sont) ajouté(s) dans la solution (A) et/ou dans la solution (B), il(s) est (sont) présent(s) en une proportion totale, de préférence, au plus égale à 20 % en poids par rapport à la quantité totale de méthacrylate de méthyle présent dans les solutions (A) et (B).

II peut être souhaitable, notamment pour éviter que des bulles d'air ne soient occluses dans les plaques coulées (nuisant ainsi à leur transparence), que l'une et/ou l'autre des solutions (A) et (B) soit dégazée sous vide partiel, par exemple sous une pression de 25 à 250 millibars.

Pour favoriser le démoulage de la plaque coulée, il peut être souhaitable de prévoir un moule constitué d'un verre minéral traité de manière à éviter une réaction entre les fonctions Si-O du verre et les fonctions NCO de l'isocyanate, par exemple un verre minéral revêtu d'une couche minérale, telle qu'une couche d'oxyde métallique, obtenue par pyrolyse.

Pour éviter que la formation du réseau polyuréthane élastomère et/ou la polymérisation du méthacrylate ne commencent avant le moment souhaité, il peut être avantageux d'utiliser un moule constitué d'un matériau permettant d'éviter la photocatalyse de polymérisation de l'un ou l'autre des monomères présents. Le moule utilisé pour la mise en oeuvre du procédé selon la présente invention doit, par ailleurs, résister à la température maximale du mélange réactionnel et être non réactif ou insoluble au contact de la charge liquide. Des moules appropriés sont réalisés à partir de substances telles que le polyéthylène, le polypropylène, le polytéréphtalate d'éthylène, des élastomères de silicone et des métaux comme, par exemple, l'aluminium, le nickel ou des alliages comme le laiton ou l'acier inoxydable. Un moule en métal sera plus particulièrement adapté lorsque le procédé selon l'invention est mis en oeuvre de manière continue, par exemple dans une installation du type laminoir.

Lorsque tous les composants du système sont dans le moule, on soumet celui-ci à des conditions, notamment de température et de pression, telles que le réseau polyuréthane se forme d'abord par réaction entre les fonctions -OH du polyol et les fonctions -NCO de l'isocyanate, puis le méthacrylate de méthyle polymérise dans ledit réseau, formant ainsi ce qu'il est convenu de nommer un réseau interpénétré. En effet, les deux réseaux macromoléculaires, celui de polyméthacrylate de méthyle et celui de polyuréthane, sont interpénétrés physiquement et substantiellement sans liaisons chimiques. Bien qu'on ne puisse pas exclure que quelques réactions de transfert intermacromoléculaires n'aient pas lieu, on peut affirmer que, grâce au procédé selon l'invention, ces réactions indésirées sont si peu nombreuses qu'elles n'affectent pas la possibilité d'obtenir simultanément d'excellentes propriétés optiques (en particulier la transparence lumineuse) et une excellente résistance au choc.

Des conditions utilisables sont, par exemple :
- en ce qui concerne la pression, une pression égale à la pression atmosphérique ou bien une pression pouvant atteindre jusqu'à 5 bars environ, ou encore une pression réduite jusqu'à 0,35 bar environ ;
- en ce qui concerne la température, celle-ci pourra être choisie dans une gamme allant de 30°C à 135°C environ, lorsque la pression est la pression atmosphérique. La température du moule pourra être augmentée progressivement, par exemple par paliers, à l'intérieur de cette gamme. De manière plus générale, il pourra être avantageux de prévoir un programme de température non uniforme dans le temps, c'est-à-dire comportant plusieurs étapes de différentes durées et conduites à différentes températures. La durée du cycle de température dépend de l'épaisseur de la plaque.

Le procédé selon la présente invention permet la fabrication de plaques coulées ayant une épaisseur comprise entre 1,5 et 25 mm environ. De telles plaques trouvent une application particulièrement importante dans la réalisation de vitrages utiles dans les différents secteurs de la sécurité civile. En outre, après pliage ou cintrage, ces plaques peuvent également être utilisées dans le domaine de l'orthopédie externe.

Les exemples non limitatifs suivants sont donnés afin de mieux illustrer l'objet de l'invention. Sauf exception, toutes les quantités sont exprimées en poids.

Le mode opératoire est le même dans tous les exemples.

On prépare à la température ambiante, sous agitation :
. d'une part, une solution (A) comprenant :
   - 11 000 parties de méthacrylate de méthyle ;
   - 786 parties de polytétraméthylène éther glycol (diol) : masse moléculaire 2000 ; 9,8 x 10⁻⁴ mole OH/g, commercialisé par la société Du PONT DE NEMOURS sous la dénomination TERATHANE T2000 ;
   - 305 parties d'hexaméthylène diisocyanate trimérisé ; % NCO : 22,2 ; 5,29 x 10⁻³ mole NCO/g, commercialisé par la société BAYER sous la dénomination DESMODUR N100 ;
   - 3,3 parties d'azo-bis-isobutyronitrile ;
   - 8,8 parties de 1,1'-azo-bis-(1-cyclohexane carbonitrile) commercialisé par la société WAKO sous la dénomination V40 ; et
. d'autre part, une solution (B) comprenant :
   - 11 000 parties de méthacrylate de méthyle ;
   - 2 parties de terpinolène ;
   - 338 parties de diacrylate de butanediol et
   - 100 parties de dibutyl dilaurate d'étain.

Ces deux solutions sont dégazées, puis mélangées à poids égal avant d'être coulées dans un moule constitué de deux plaques de verre de dimensions 600 x 800 x 8 mm et d'un joint en poly(chlorure de vinyle) d'épaisseur 5,6 mm, l'assemblage étant réalisé à l'aide de pinces. Ce moule est plongé dans un bac de polymérisation réglé à la température de 30°C. La température de ce bac est d'abord maintenue à 30°C pendant 30 minutes, puis portée à 60°C en 45 minutes, et maintenue à cette valeur pendant 4 heures et 30 minutes. Le moule est alors transféré dans une étuve à air où la température est portée à 115°C en 1 heure et maintenue à cette valeur pendant 2 heures. On ramène ensuite la température à 50°C et on maintient celle-ci à cette valeur pendant 30 minutes, avant de procéder au démoulage. On obtient ainsi une plaque coulée d'épaisseur 4 mm comprenant 4,5 % en poids de polyuréthane.

Dans les différents exemples qui vont suivre, on ajoute de l'antioxydant redox (composé I), de l'antioxydant primaire (composé Il) et éventuellement un agent absorbeur UV (composé III).

Les teneurs en composés I, II et III sont exprimées, dans tous les exemples, en pourcentage en poids par rapport au méthacrylate de méthyle.

### Exemples 1a à 1e

Selon le procédé défini ci-dessus, on réalise en parallèle une série de préparations 1a à 1e en ajoutant, à la solution (B), le composant I, le bis (2,2,6,6-tétraméthyl-4-pipéridyl) sébaçate (TINUVIN 770). La préparation 1a est un exemple témoin. Aux préparations 1b à 1e, selon l'invention, on ajoute, aussi à la solution B, le composant II : 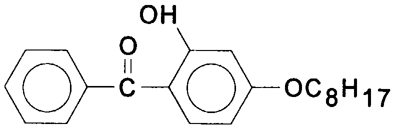 commercialisé par la Société CIBA sous la dénomination "CHIMASSORB 81", (2-hydroxy-4-n-octyloxybenzophénone) et en faisant varier les quantités de TINUVIN 770 (composant I) et de CHIMASSORB 81 (composant II).

Les propriétés mesurées sont :
- le choc Charpy non entaillé, déterminé selon la norme AFNORT T 51035 ; et
- l'indice de Haze (turbidité), (valeurs initiale et après vieillissement en enceinte climatique XENOTEST 1200® sur différentes durées).

Les résultats sont rassemblés dans le Tableau I.

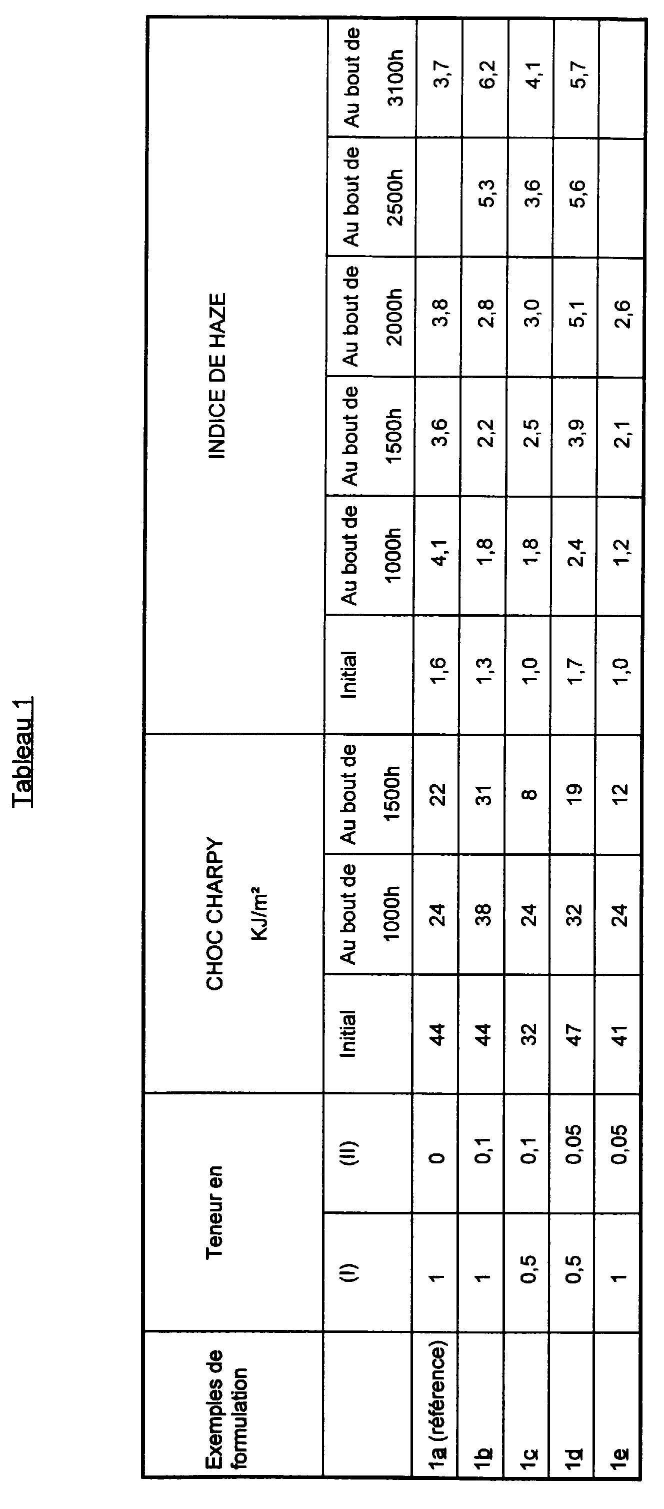

### Exemples 2a et 2b

On a procédé comme aux exemples 1a et 1b, mais en utilisant, comme composant I, le 1,3,5-triazine-2,4,6-triamine,N,N'''-[1,2-éthanediylbis[[[4,6-bis-[butyl(1,2,2,6,6-pentamethyl-4-piperidinyl)amino]-1,3,5-triazine-2-yl]imino]-3,1-propanediyl]]bis[N',N''-dibutyl-N',N''-bis(1,2,2,6,6-pentamethyl-4-piperidinyl) commercialisé par la Société CIBA, sous la dénomination "CHIMASSORB 119".

Les résultats sont rapportés dans le Tableau 2.

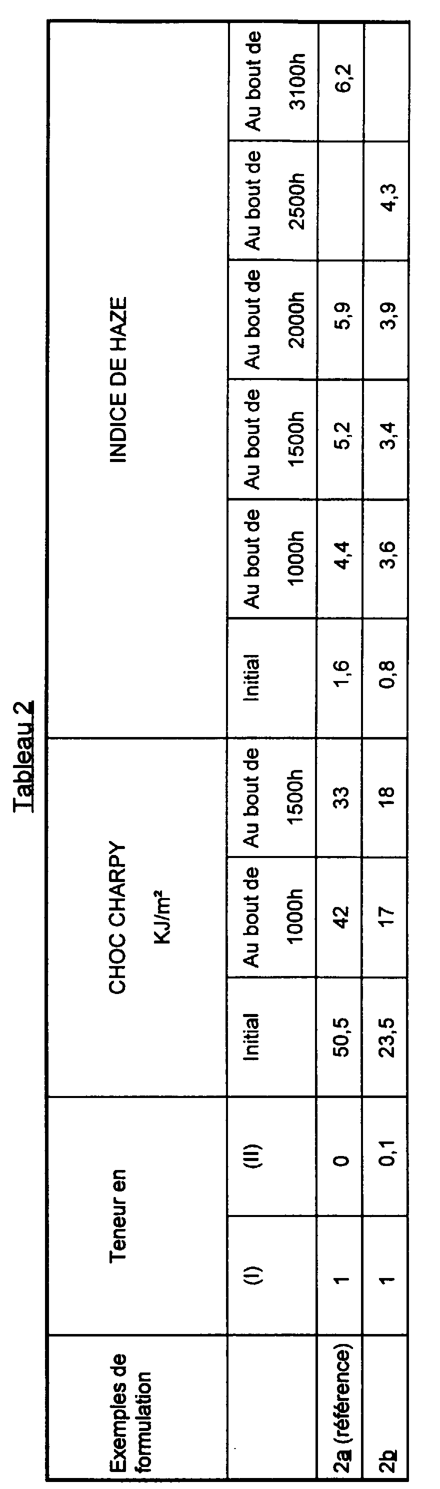

### Exemples 3a à 3e

On a procédé comme aux exemples 1a à 1e, mais en utilisant, comme composant I, le bis(1,2,2,6,6-pentaméthyl-4-piperidyl) sebaçate commercialisé par la Société CIBA sous la dénomination TINUVIN 765.

Les résultats sont donnés au tableau 3.

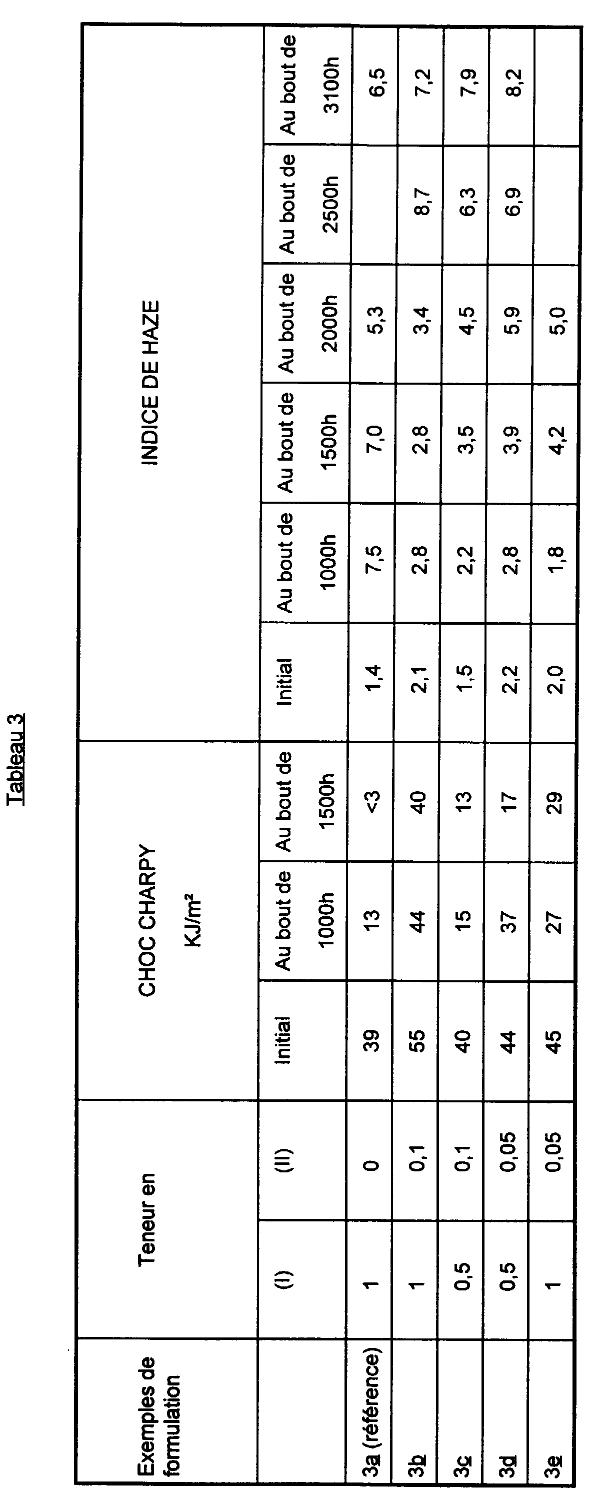

### Exemples 4a à 4e

On a procédé comme aux exemples 1a à 1e, mais en utilisant, comme composant I, le produit qui comprend un mélange de 1,2,2,6,6-pentaméthyl-4-piperidyl-1,2,3,4-butane-tetracarboxylate et de 1,2,2,6,6-pentaméthyl-4-tridécyl-1,2,3,4-butane-tetracarboxylate commercialisé par la Société PALMAROLE sous la dénomination ADK-LA 62,.

Les résultats sont rapportés au tableau 4.

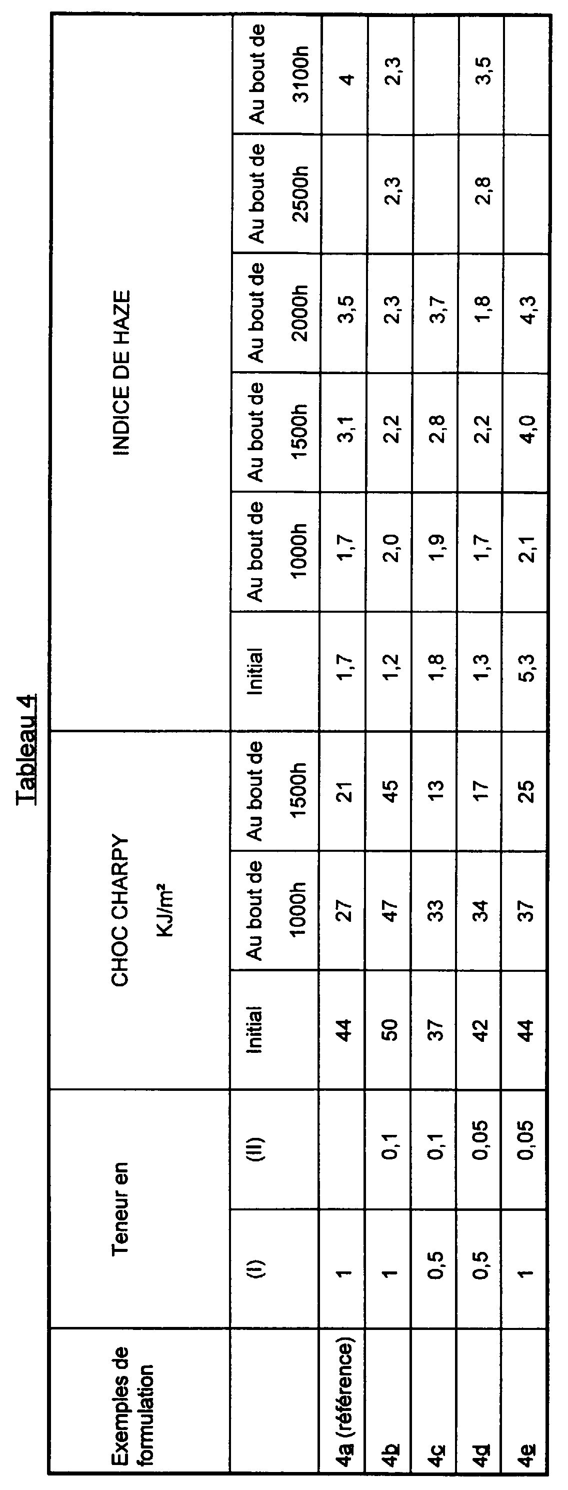

### Exemple 5 :

On opère comme à l'exemple 1b, mais on ajoute un agent absorbeur UV (composé III) de formule : 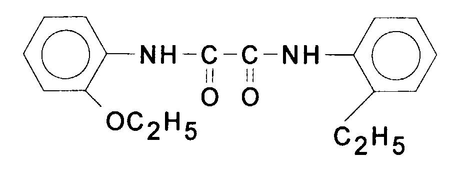 commercialisé par la société CIBA sous la dénomination "TINUVIN 312", (N,N'-(2-ethyl-2'-ethoxyphenyl)-oxanilide.

Les propriétés mesurées sont :
- le choc CHARPY non entaillé, déterminé selon la norme AFNORT T51 035
- l'indice de Haze (turbidité) et
- l'indice de jaune
en tant que valeurs initiales et après vieillissement en enceinte climatique Weatherometer XR35.

Les résultats sont rassemblés dans le tableau 5.

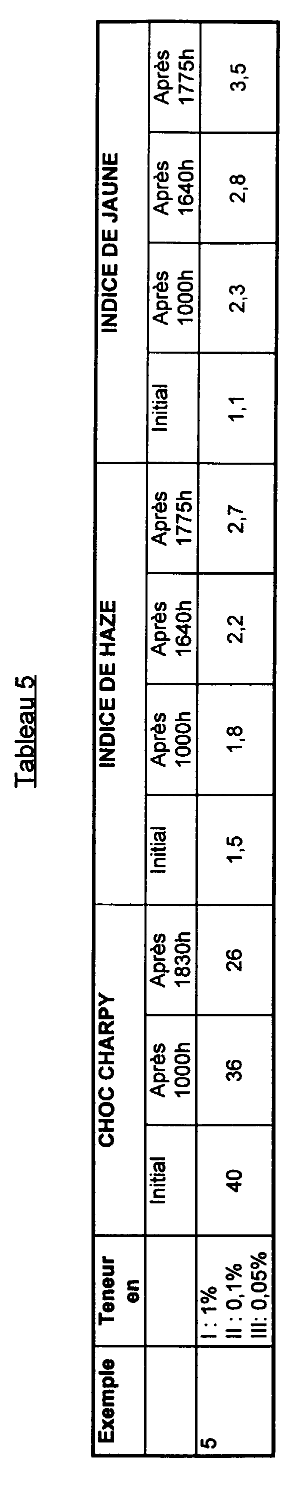

## Revendications

1. Composition pour plaques coulées de poly(méthacrylate de méthyle) interpénétré avec du polyuréthane élastomère, dans laquelle le rapport des composants de base du réseau polyuréthane - c'est-à-dire la somme du (ou des) composé(s) organique(s) à fonctions isocyanates et du (ou des) polyol(s) - à la somme de ces composants et du méthacrylate de méthyle, est compris entre 3 % et 8 %, caractérisée par le fait qu'elle comprend un système stabilisant constitué par :
(I) 0,1 à 2 % en poids d'au moins un antioxydant redox ;
(II) 0,01 à 0,5 % en poids d'au moins un antioxydant primaire photostable ;
(III) jusqu'à 0,5 % en poids d'un agent absorbeur UV,
ces pourcentages étant rapportés au méthacrylate de méthyle.

2. Composition selon la revendication 1, caractérisée en ce que l'antioxydant redox (I) est un composé du type HALS à groupement piperidinyl, doublement substitué en ortho par des groupements alkyle.

3. Composition selon la revendication 2, caractérisée en ce que l'antioxydant redox (I) est choisi parmi les composés des formules : 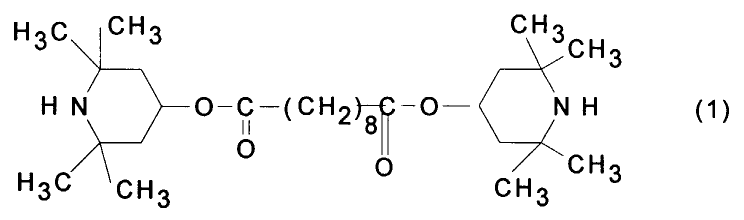 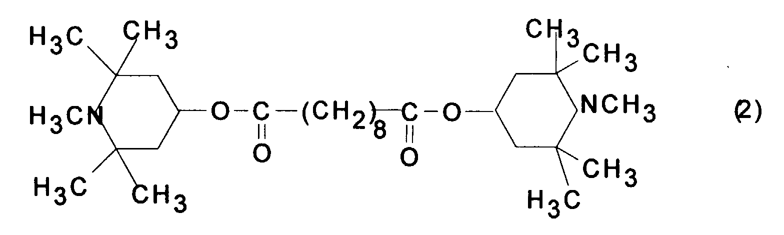 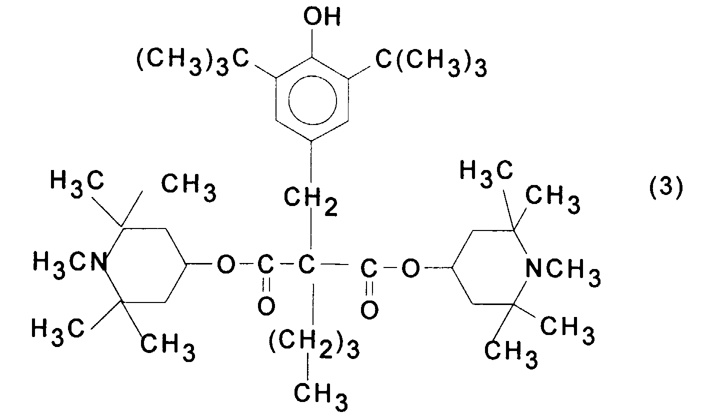 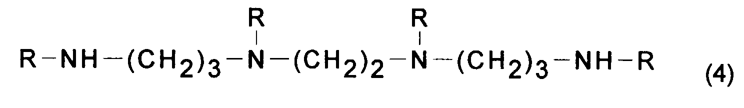 avec 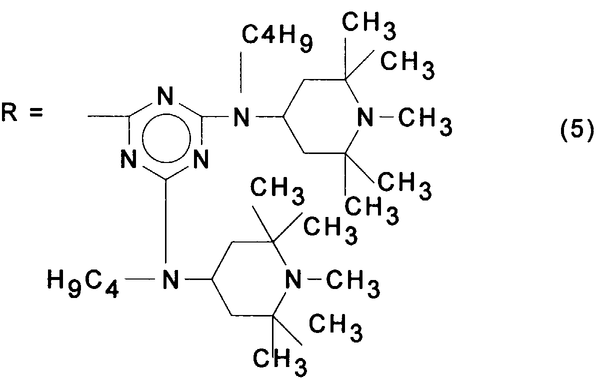 et 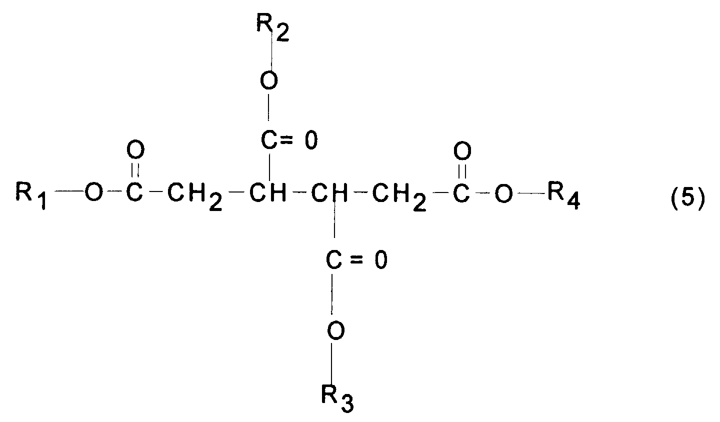 avec R₁, R₂, R₃, R₄ = 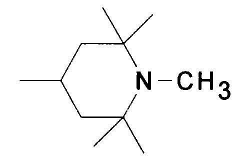 ou - C₁₃H₂₇

4. Composition selon l'une des revendications 1 à 3, caractérisée par le fait que l'antioxydant primaire photostable (Il) est choisi parmi les hydroxybenzophénones de formule : 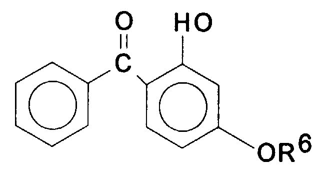 avec R⁶, est un atome d'hydrogène ou un groupe alkyle ayant de 1 à 12 atomes de carbone.

5. Composition selon l'une des revendications 1 à 4, caractérisée par le fait que l'agent absorbeur UV (III) est choisi parmi les produits suivants : 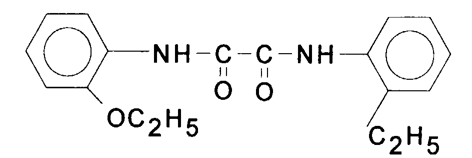 et 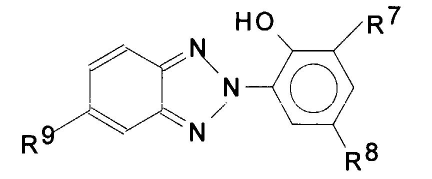 dans laquelle R7 et R8 sont des groupes alkyle ou arylalkyle, dans lesquels le groupe alkyle a de 1 à 5 atomes de carbone, tels que méthyle, butyle, butyle secondaire, butyltertiaire, pentyle, R9 est un atome d'hydrogène ou de chlore.

6. Composition selon l'une des revendications 1 à 5, caractérisée en ce que le système stabilisant comprend 0,1 à 2 % en poids de (I), 0,01 à 0,5 % en poids de (II) et 0,01 à 0,5 % en poids du composé (III), ces pourcentages étant rapportés à la masse de monomère méthacrylate de méthyle.

7. Procédé de fabrication d'une plaque coulée de polyméthacrylate de méthyle interpénétré avec du polyuréthane élastomère, comprenant les étapes suivantes :
- dans une première étape, on prépare séparément, d'une part, une solution (A) de méthacrylate de méthyle comprenant au moins un initiateur de polymérisation radicalaire, au moins un composé organique comportant au moins deux fonctions isocyanates, au moins un polyol susceptible de constituer un réseau polyuréthane élastomère avec les fonctions isocyanates du composé organique et, d'autre part, une solution (B) de méthacrylate de méthyle comprenant au moins un agent de réticulation du méthacrylate de méthyle et au moins un catalyseur susceptible de permettre la formation dudit réseau de polyuréthane, le rapport des composants du réseau polyuréthane - c'est-à-dire la somme du (ou des) composé(s) organique(s) à fonctions isocyanates et du (ou des) polyol(s) à la somme de ces composants et du méthacrylate de méthyle étant compris entre 3 % et 8 % en poids environ ; puis
- dans une seconde étape, on mélange les solutions (A) et (B) ; puis
- dans une troisième étape, on introduit le mélange obtenu au cours de la seconde étape dans un moule ; puis
- dans une quatrième étape, on soumet le moule contenant le mélange des solutions (A) et (B) à des conditions de pression et de température propres à permettre successivement la formation du réseau polyuréthane, puis la polymérisation dudit méthacrylate de méthyle dans ledit réseau ; et
- dans une dernière étape, on laisse refroidir le mélange polymérisé dans le moule avant de procéder au démoulage de la plaque coulée,
caractérisé en ce que, dans l'une des solutions (A) ou (B) ou bien dans leur mélange, on ajoute un système de stabilisant constitué par
- 0,1 à 2% en poids d'au moins un antioxydant redox (I)
- 0,01 à 0,5 % en poids d'au moins un antioxydant primaire photostable (Il);
- jusquà 0,5 % en poids d'un agent absorbeur UV (III).

8. Procédé de préparation de polyméthacrylate de méthyle interpénétré avec du polyuréthane élastomère à partir d'un mélange de méthacrylate de méthyle, d'au moins un initiateur de polymérisation radicalaire, au moins un composé organique comportant au moins deux fonctions isocyanates, au moins un polyol susceptible de constituer un réseau polyuréthane élastomère avec les fonctions isocyanates du composé organique, au moins un agent de réticulation du méthacrylate de méthyle et au moins un catalyseur susceptible de permettre la formation dudit réseau polyuréthane, le rapport des composants du réseau polyuréthane -c'est-à-dire la somme du (ou des) composé (s) organique(s) à fonctions isocyanates et du (ou des) polyol(s) à la somme de ces composants et du méthacrylate de méthyle, étant compris entre 3 % et 8 % en poids, caractérisé en ce qu'on prépare le mélange de tous les composants à température ambiante et on lui ajoute un système stabilisant constitué par 0,1 à 2 % en poids d'au moins un antioxydant redox (I), 0,01 à 0,5 % en poids d'au moins un antioxydant primaire photostable (Il) et jusqu'à 0,5 % en poids d'un agent absorbeur UV (III), puis on introduit dans un moule le mélange obtenu et on soumet le moule contenant le mélange à des conditions de pression et de température propres à permettre successivement la formation du réseau polyuréthane, puis la polymérisation dudit méthacrylate de méthyle dans ledit réseau, puis on laisse refroidir le mélange polymérisé dans le moule avant de procéder au démoulage de la plaque coulée.

9. Procédé selon l'une des revendications 7 ou 8, caractérisé par le fait que le moule contenant le mélange des composants est soumis à une température de 30°C à 135°C à la pression atmosphérique.

10. Procédé selon la revendication 9, caractérisé par le fait que le moule est soumis à un cycle de température non uniforme dans le temps.
